# EUROPEAN PATENT APPLICATION

(11) **EP 1 722 159 A1**
(43) Date of publication of application: **15.11.2006**
(21) Application number: 04714451.4
(22) Date of filing: 25.02.2004
(51) Int. Cl.: F21S 8/10, B60Q 1/08, G02B 26/08

(54) **VEHICLE HEADLIGHT AND VEHICLE OPERATION SUPPORT APPARATUS**

(71) Applicant: HITACHI, LTD., Chiyoda-ku Tokyo 100-8280 (JP)
(72) Inventor: YOKOYAMA, Shingo c/o Hitachi, Ltd. 12th Floor,, Chiyoda-ku Tokyo 100-8220 (JP); KANAMARU, Masatoshi c/o Hitachi, Ltd. 12th Floor,, Chiyoda-ku Tokyo 100-8220 (JP); HORINO, Masaya c/o Hitachi, Ltd. 12th Floor,, Chiyoda-ku Tokyo 100-8220 (JP); MONJI, Tatsuhiko c/o Hitachi, Ltd. 12th Floor,, Chiyoda-ku Tokyo 100-8220 (JP); OHSUMI, Ken c/o Hitachi, Ltd. 12th Floor,, Chiyoda-ku Tokyo 100-8220 (JP)
(74) Representative: Beetz & Partner
(86) International application number: PCT/JP2004/002160
(87) International publication number: WO 2005/080859

(57) **Abstract**

A vehicle headlight having a light source to emit light and a reflector for illuminating forward the light emitted from the light source, wherein the reflector is comprising a plurality of movable mirrors to be operated independently and optionally and a fixed mirror disposed outside these movable mirrors, whereby the light emitted from the light source to the movable mirrors are not blocked mutually so that a distribution of light illuminated from the vehicle headlight is minutely and quickly controlled.

## Description

### TECHNICAL FIELD

### BACKGROUND OF THE INVENTION

### [Field of Technology]

This invention relates to a vehicle headlight and a vehicle operation support apparatus.

### [Background of Art]

The safety in automobile nighttime driving has so far been increased to vehicle headlights, which, in coordination with steering, are conditioned to control a distribution of their light to a driving direction. In addition, it has been further enhanced by such a combination of in-vehicle sensors and light-distribution-controlled headlights as to use in-vehicle sensors to recognize situations on the road and to automatically control the light distribution of headlights. This vehicle operation support apparatus is proposed in, for instance, Japanese Patent Publication No. 2951184.

### SUMMARY OF THE INVENTION

However, the device described in the above gazette only works so that, when the vehicle is on a curved road, part of the light can be directed sideways along the white line(s) of the road. No consideration is given to minute light distribution control responsive to situations on the road. Besides, the light is directed sideways by a sub-reflector, and its actuator is powered by a motor. The large size of the sub-reflector itself gives rise to such problems as a longer operational duration of the device, the necessity of a larger space to accommodate, and the complication of the driving mechanism.

A principal object of present invention is to obtain a minute and quick distribution control of light illuminated from a vehicle headlight by constructing a reflector for illuminating forward light emitted from the light source with a plurality of independently movable mirrors. Namely, the object of this invention is to provide a vehicle headlight and a vehicle operation support apparatus having a light source to emit light and a reflector for illuminating forward the light emitted from the light source, wherein the reflector is comprising a plurality of movable mirrors to be operated independently and optionally and a fixed mirror disposed outside these movable mirrors, whereby the light emitted from the light source to the movable mirrors are not blocked mutually.

It is a further object of this invention to provide a vehicle headlight and a vehicle operation support apparatus allowing that a sensor for detecting a situation surrounding the vehicle and other sensor for detecting an operational condition of the vehicle, and that a distribution of the light illuminated from the vehicle headlight is controlled with optimal to the situation surrounding the vehicle and to the operational condition of the vehicle based on the output of these sensors.

It is yet another object of this invention to provide a construction for securing a sensitivity of a sensor (particularly CCD camera) without giving a sense of dazzle to pedestrians or drivers present ahead of the vehicle.

The above-mentioned objects are achievable by ensuring that, in a vehicle headlight having a light source to emit light and a reflector for illuminating forward the light emitted from the light source, wherein the reflector is comprising a plurality of movable mirrors to be operated independently and optionally and a fixed mirror disposed outside these movable mirrors, whereby the light emitted from the light source to the movable mirrors are not blocked mutually.

The above-mentioned objects are also achievable by ensuring that the movable mirrors are operated in a direction of two axes at right angles to each other.

The above-mentioned objects are also achievable by ensuring that the movable mirror is comprising a mirror member, first beam connecting the mirror member, a frame positioned so as to surround the mirror member, second beam connecting the frame and a mirror base plate placed outside the frame, wherein the first and second beams work as rotational axes of the mirror member at right angles to each other, and the frame, beams and mirror base plate reflect the light emitted from the light source, respectively.

The above-mentioned objects are also achievable by ensuring that back side of the movable mirror is formed out of either a soft magnetic material, a permanent magnet or a coil, and a plurality of stator coil positioned facing the back side of the movable mirror, and magnetic force between the movable mirror and the stator coil is controlled so as to operate the movable mirror with an optional angle in the direction of two axes at right angles to each other.

The above-mentioned objects are also achievable by ensuring that the movable mirror is operated to optionally alter a distribution of light illuminated from the vehicle headlight.

The above-mentioned objects are also achievable by ensuring that the vehicle headlight has a high-intensity discharge lamp for the light source, and the movable mirror is operated to control the light illuminated from the vehicle headlight.

The above-mentioned objects are also achievable by ensuring that a part of plurality of movable mirrors have a function of transmitting visible light emitted from the light source and reflecting infrared light emitted from the light source, and further comprising an electric circuit for controlling the part of plurality of the movable mirrors independently of other part of plurality of movable mirrors, so that control of distributing visible light and infrared light is achieved separately.

The above-mentioned objects are also achievable by ensuring that a sensor for detecting a situation surrounding the vehicle and other sensor for detecting an operational condition of the vehicle are used, and that a distribution of the light illuminated from the vehicle headlight is controlled with optimal to the situation surrounding the vehicle and to the operational condition of the vehicle based on the output of these sensors.

According to this invention, therefore, in a vehicle headlight having a light source to emit light and a reflector for illuminating forward the light emitted from the light source, wherein the reflector is comprising a plurality of movable mirrors to be operated independently and optionally and a fixed mirror disposed outside these movable mirrors, whereby the light emitted from the light source to the movable mirrors are not blocked mutually. This, then, makes it possible to obtain a minute and quick distribution control of the light illuminated from the vehicle headlight.

According to this invention, it is also possible to implement a vehicle headlight and a vehicle operation support apparatus allowing that a sensor for detecting a situation surrounding the vehicle and other sensor for detecting an operational condition of the vehicle are used, and that a distribution of the light illuminated from the vehicle headlight is controlled with optimal to the situation surrounding the vehicle and to the operational condition of the vehicle based on the output of these sensors.

According to this invention, it is also possible to secure a sensitivity of a sensor (particularly CCD camera) without giving a sense of dazzle to pedestrians or drivers present ahead of the vehicle.

### BRIEF DESCRIPTION OF THE DRAWINGS

Figure 1 is a front view of a plurality of movable mirrors positioned on a fixed mirror in a first embodiment of this invention.
Figure 2 is a structure of an electromagnetic actuator for a movable mirror in the first embodiment of this invention.
Figure 3 is a structure of an electromagnetic actuator for a movable mirror in the second embodiment of this invention.
Figure 4 is a structure of an electromagnetic actuator for a movable mirror in the third embodiment of this invention.
Figure 5 is a structure of a vehicle headlight in the first embodiment of this invention.
Figure 6 is a structure of a vehicle headlight in the second embodiment of this invention.
Figure 7 is a structure of a vehicle headlight in the third embodiment of this invention.
Figure 8 illustrates a light distribution obtained by a vehicle headlight in the embodiment of this invention.
Figure 9 illustrates a light distribution (with high beam) obtained by a vehicle headlight in the embodiment of this invention.
Figure 10 illustrates a light distribution with a pattern obtained by a vehicle headlight in the embodiment of this invention.
Figure 11 illustrates a light distribution with another pattern obtained by a vehicle headlight in the embodiment of this invention.
Figure 12 illustrates a light distribution with other pattern obtained by a vehicle headlight in the embodiment of this invention.
Figure 13 is a system diagram for a vehicle headlight and a vehicle operation support apparatus in the embodiment of this invention.

### DETAILED DESCRIPTION OF THE INVENTION

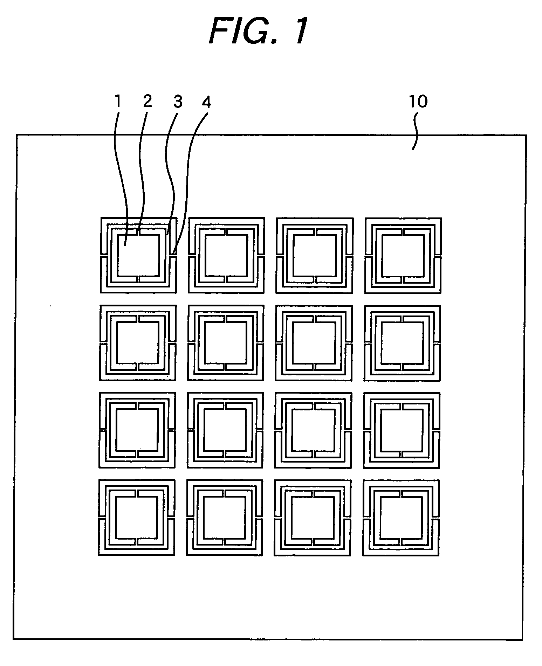

Figure 1 shows a front view of plural movable mirrors positioned with regard to a fixed mirror which are comprising a reflector for illuminating forward light emitted from a light source for use with a vehicle headlight of this invention. The figure shows movable mirrors 1 placed in 4 rows by 4 columns. A movable mirror 1 is joined to two beams 2 placed on a rotational axis and to a frame 3 positioned so as to surround the mirror. And the frame 3 is joined to two beams 4 placed on a rotational axis at right angles to said rotational axis, which are in their turn joined to a fixed mirror 10. In this manner, the movable mirror 1 is so constructed as to be capable of, so to speak, two-axis rotation with regard to the axes through the beams 2 and the beams 4. The beams 2 and 4 and the frame 3 are included in the mirror base plate, which is made of a soft magnetic material like iron or nickel or silicon crystals. The mirror surface is formed by evaporating a high-reflectivity metallic film (gold or aluminum etc.) onto said mirror base plate.

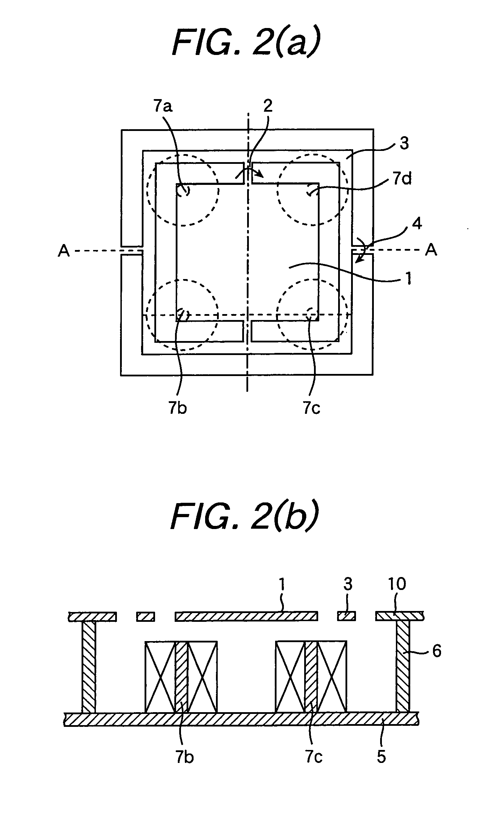

Figure 2 shows a structure of an electromagnetic actuator for the movable mirror 1 in the first embodiment of this invention. Figure 2 (a) is a front view, and Figure 2 (b) is a sectional view taken along the line A - A of Figure 2 (a). The fixed mirror 10 and the movable mirror 1 are constructed out of a soft magnetic material like iron or nickel etc.. Stator coils 7 made out of an iron core and a copper wire winding around the iron core are placed on a stator base plate 5. The movable mirror 1 has the stator coils 7 facing its back side, and the fixed mirror 10 is thus joined to the stator base plate 5 by inserting a spacer 6 in between. This construction allows that exciting the stator coils 7 generates an attractive force between the movable mirror 1 and the stator coils 7, and that, in accordance with the balance between the attractive force and a repulsive force due to the torsional rigidity of the beams 2 and 4, the movable mirror 1 is operated at an optional angle.

The operation of the movable mirror 1 is controlled as follows. With reference to Figure 2 (a), assuming the beam 2 to be turned on its rotational axis, the movable mirror 1 is operated to change a direction thereof in the direction denoted by the arrow is made possible by exciting the stator coils 7d and 7c, and the movable mirror 1 is operated to change a direction thereof in the opposite direction by exciting the stator coils 7a and 7b. On the other hand, assuming the beam 4 to be turned on its rotational axis, the movable mirror 1 is operated to change a direction thereof in the direction denoted by the arrow is made possible by exciting the stator coils 7b and 7c, and the movable mirror 1 is operated to change a direction thereof in the opposite direction by exciting the stator coils 7a and 7d. Note that, as far as Figure 2 is concerned, the polarities of the stator coils can in principle be optional. But to increase their attractive forces it will be better to make sure of a good efficiency when the excitation during operation of the movable mirror 1 causes these pairs of stator coils to produce magnetic fluxes and to flow them to the movable mirrors 1. Therefore, these pairs of stator coils will desirably have their north and south poles both put to use.

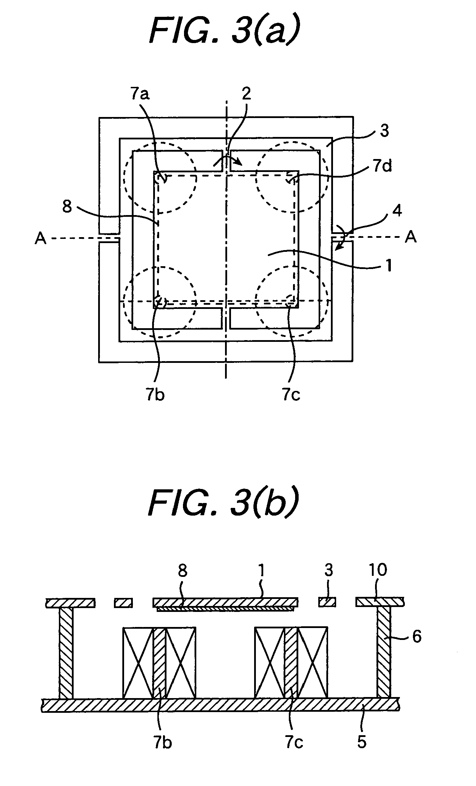

Figure 3 shows the construction of an electromagnetic actuator for the movable mirror 1 in the second embodiment of this invention. Figure 3 (a) is a front view, and Figure 3 (b) is a sectional view taken along the line A - A of Figure 3 (a). The fundamental construction is the same as shown in Figure 2, but on the backside of the movable mirror 1 there is formed a permanent magnet 8. The permanent magnet 8 is formed by, for instance, fastening a thin-film shaped permanent magnet on the backside of the movable mirror 1 or sputter deposition of a permanent magnet chemical compound on it. In this manner, the movable mirror 1 and the stator coils 7 have greater attractive forces in between than shown in Figure 2 with benefits such as the following. Increasing the tortional rigidity of the beams 2 and 4 allows a higher resonance frequency of the movable mirror 1. Having the same attractive forces as shown in Figure 2 allows a smaller exciting current flowing to the stator coils 7, resulting in their reduced size and saved electric power. The mirror base plate is implemented using a non-magnetic material like a silicon base plate, which is more suitable for micro fabrication.

The operation direction for the movable mirror 1 is controlled as follows. It is here assumed that the stator coils 7 face the north pole of the permanent magnet 8. With reference to Figure 3 (a), assuming the beam 2 to be turned on its rotational axis, the movable mirror 1 is operated to change a direction thereof in the direction denoted by the arrow is made possible by exciting the stator coils 7d and 7c so as to generate a south polar attractive force. Further increasing the operation direction of the movable mirror 1 is made possible by exciting the stator coils 7a and 7b so as to generate a north polar repulsive force. Namely a mixture of these attractive and repulsive forces adds to the torque of the movable mirror 1. The operation direction for the movable mirror 1 is operated in the opposite direction is, conversely, made possible by exciting the stator coils 7a and 7b so as to generate a south polar force and, if necessary, by exciting the stator coils 7d and 7c so as to generate a north polar force. On the other hand, assuming the beam 4 to be turned on its rotational axis, the movable mirror 1 is operated to change a direction thereof in the direction denoted by the arrow is made possible by exciting the stator coils 7b and 7c so as to generate a south polar force and, if necessary, by exciting the stator coils 7a and 7d so as to generate a north polar force. The operation direction for the movable mirror 1 is operated in the opposite direction is, conversely, made possible by exciting the stator coils 7a and 7d so as to generate a south polar force and, if necessary, by exciting the stator coils 7b and 7c so as to generate a north polar force.

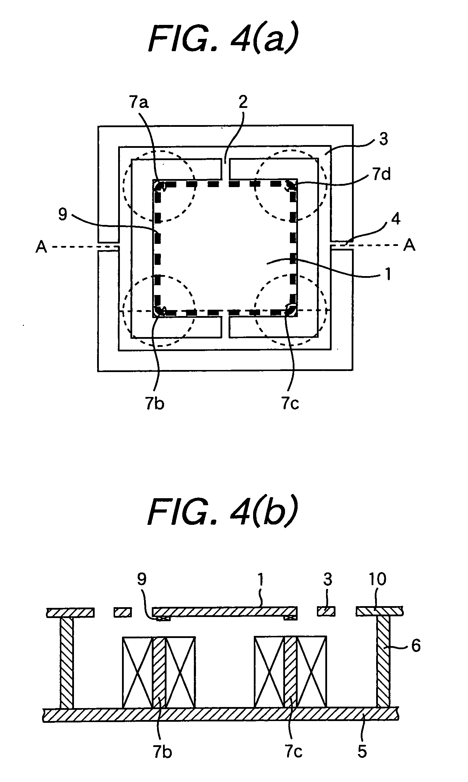

Figure 4 shows the construction of an electromagnetic actuator for the movable mirror 1 in a third embodiment of this invention. Figure 4 (a) is a front view, and Figure 4 (b) is a sectional view taken along the line A - A of Figure 4 (a). The fundamental construction is the same as shown in Figure 2 and Figure 3, but on the backside of the movable mirror 1 there is formed a coil 9. The coil 9 is fed with an excitation current so that the movable mirror 1 and the stator coils 7 will have a greater attractive force in between. According to this embodiment, there is no necessity for using a permanent magnet as shown in Figure 3 when, though the movable mirror 1 and the stator coils 7 need to have greater attractive forces in between, such a permanent magnet as shown in Figure 3 has a strong possibility of being affected by the heat radiated from a light source, going over its allowable temperature limit (generally speaking 150°C or so), quickly demagnetizing and decreasing in the performance in generating attractive forces. The coil 9, for instance, if a silicon base board is adopted to make the mirror, has its winding formed by sputter deposition of copper on it. The feeder wires are formed through the beams 2, 3 and 4. In this manner, the coil 9 is formed using copper wires whose insulating material has its allowable temperature limit (200°C or so), yet the movable mirror 1 and the stator coils 7 have a greater attractive force in between. Mirror directing for the movable mirror 1 is controlled the same way as shown in Figure 4.

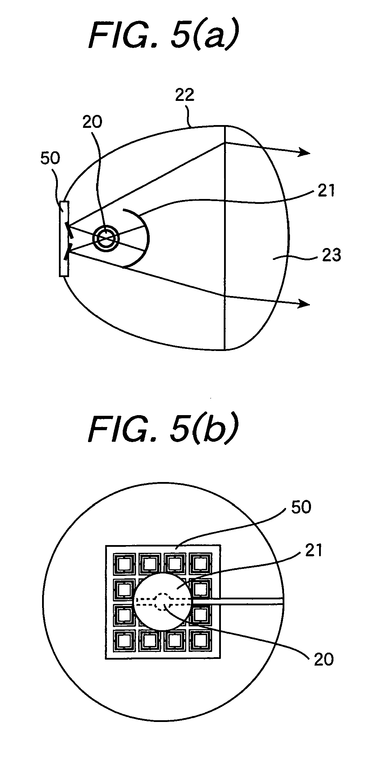

Referring now to Figure 5, there is shown a vehicle headlight whose light distribution is controlled by using a plurality of movable mirrors positioned on a fixed mirror shown in Figure 1 in the above-mentioned first embodiment of this invention. Figure 5 (a) is a side view, Figure 5 (b) is a front view. A minute and quick distribution control of the light from a vehicle headlight is made possible by effectively converging the light emitted from a light source onto a plurality of movable mirrors. This is achieved as follows. As shown in Figure 5 (a), considering that a light bulb 20 emits light, part of which goes forward so cannot be directly controlled in terms of distribution, the bulb 20 has a spherical mirror 21 placed ahead of it, and the light emitted forward from the bulb 20 is reflected backward by the spherical mirror 21. In the region reflecting the light, there is placed a movable-mirror array 50 where a plurality of the movable mirrors 1 are positioned. And light is reflected by the movable-mirror array 50 and by a reflector 22, goes through a convex lens 23 and illuminates forward a distribution of light. Here, controlling the direction angle of each movable mirror 1 positioned in the movable-mirror array 50 allows a desired minute light distribution. A discharge-lamp type bulb, which is incapable of the light control on its own as a light source, is made capable of light control by directing some of the movable mirrors in the movable-mirror array 50 beyond its own forward illumination range. Note that, in case the movable-mirror array 50 should be out of order, the beams restore the movable mirrors back into place owing to their tortional rigidity, and restore a basic light distribution pattern (for low beam). And also note that, though according to this embodiment the bulb 20 and the spherical mirror 21 are positioned almost at the center of the movable-mirror array 50, their positions and their primary light-distributed regions may be changed.

On the other hand, a CCD camera, which is a type of a vehicle-mounted sensor mentioned in the beginning of this specification, is capable of detecting infrared light undetectable to the human eye, so of quickly grasping situations far ahead of the vehicle after infrared light emission over there. A vehicle headlight capable of controlling its distribution of both visible and infrared light independently from a single light source is made possible by forming on some of the movable mirrors in the movable-mirror array 50 a wavelength selective film (which reflects infrared light with wavelengths of more than 0.78 µm to 0.1 mm and transmits visible light with wavelengths of 0.38 to 0.78 µm).

According to the above-described construction, therefore, a vehicle headlight is implemented so as to be smaller-sized and more minutely and quickly light distributed than conventional light-distribution-controlled headlights. Note that, according to these embodiments where movable mirrors are placed quadratically in 4 rows by 4 columns, an increase of the number of these mirrors makes it possible to obtain a more minute light distribution control. And also note that placing them not quadratically but something like circularly makes it possible to use light more effectively.

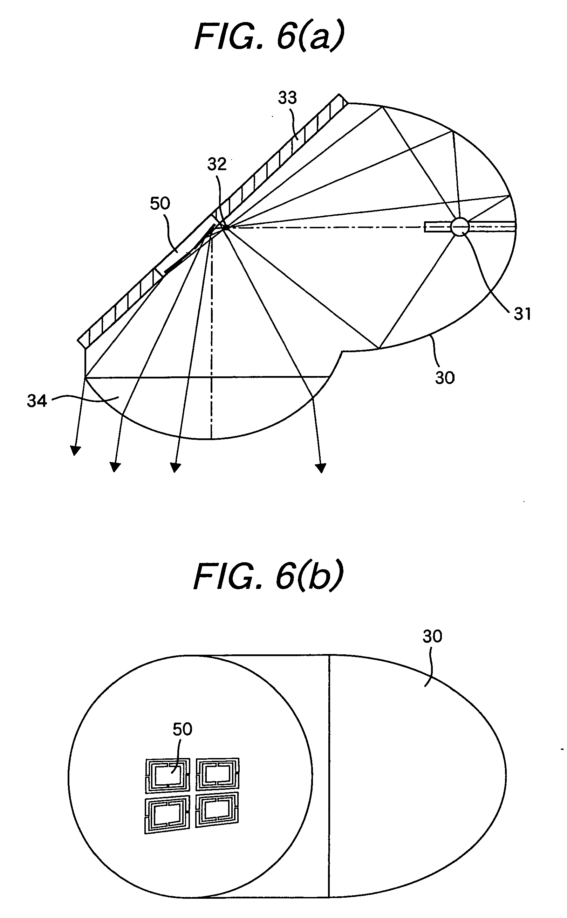

There is shown in Figure 6 a movable-mirror array 50 employed for a vehicle headlight in the second embodiment of this invention (Figure 6 (a) is a side view and Figure 6 (b) is a front view). In Figure 5, the movable-mirror array 50 is placed close to behind the light source, a spherical mirror 21 is employed to converge light onto the movable-mirror array 50. But in Figure 6, the vehicle headlight has an elliptic mirror 30 with two focal points, a bulb 31 of the light source placed near a focal point of the elliptic mirror 30, a movable-mirror array 50 positioned a little far from another focal point of the elliptic mirror 30 at an angle of 45 degrees to the light axis along the bulb 31 and a plane mirror 33 placed in parallel with the movable-mirror array 50. Light emitted from the bulb 31 is reflected by the movable-mirror array 50 and by the plane mirror 33, passes through a convex lens 34 and illuminates with a light distribution forward. Controlling the direction angle of each movable mirror 1 in the movable-mirror array 50 allows a desired minute light distribution.

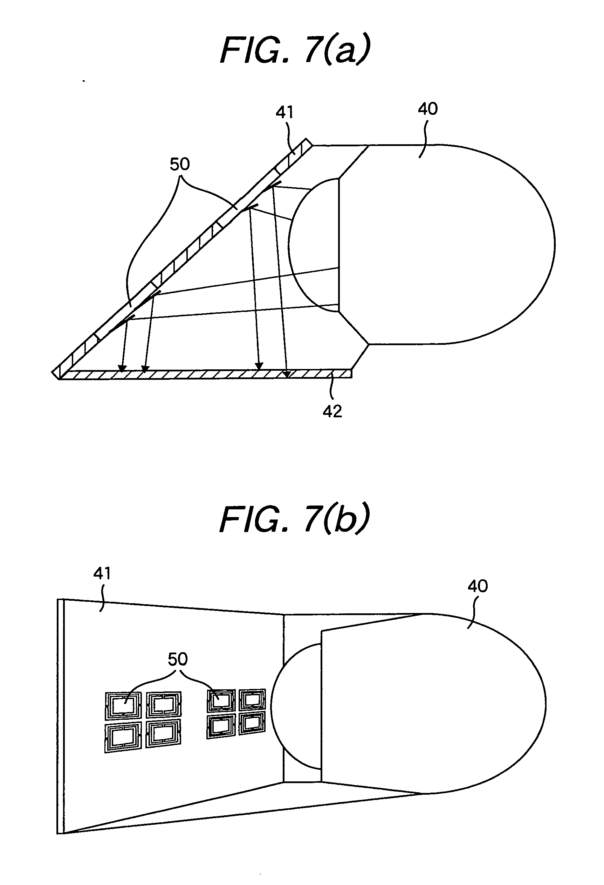

There is shown in Figure 7 a movable-mirror array 50 employed for a vehicle headlight in the third embodiment of this invention (Figure 7 (a) is a side view and Figure 7 (b) is a front view, but a transparent covering 42 not shown to the full). Here, the movable-mirror array is not positioned near its light source as shown in Figure 5 or Figure 6, but light distribution control is performed by using a conventional floodlighting projector-type headlight for the light source. A floodlighting projector-type headlight 40 has the movable-mirror array 50 positioned in front of it and also at an angle of 45 degrees to its light axis and has a plane mirror 41 placed in parallel with the movable-mirror array 50. This movable-mirror array 50 needs to be positioned in a highly luminous and effectively light-distributable region (in the figure two set of the movable-mirror arrays 50 are positioned). Light illuminated from the headlight 40 is reflected by the movable-mirror array 50 and by the plane mirror 41, passes through a waterproof and dust-proof transparent covering 42 and illuminates with a light distribution forward. This has the same effects as that in Figures 5 and 6, but a characteristic feature is that a conventional floodlighting projector-type headlight need only be joined to the movable-mirror array 50, to the plane mirror 41 and to the transparent covering 42 in order to implement a vehicle headlight capable of light distribution control, resulting in no drastic changes from the design adopting a conventional floodlighting projector-type headlight so in advantageous cost performance. A vehicle headlight described with reference to Figures 5 to 7 has a great advantage that the requirement for vehicle-mounted parts having a non-resonant frequency (for instance 100 Hz or higher) can be met by using these small-sized lightweight movable mirrors 1.

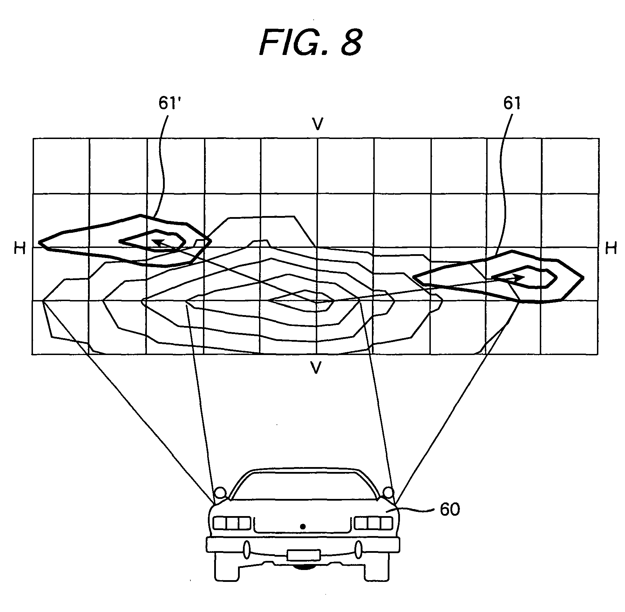

There is shown in Figure 8 a light distribution illuminated from a vehicle headlight made possible by using the vehicle headlight described with reference to Figures 5 to 7. In the figure, lateral axis represents a horizontal direction, and vertical axis represents a vertical direction. The example shown is a light distribution of low-beam equal-intensity points (the center is a maximum-intensity zone) illuminated from a vehicle 60. Operating the above-mentioned movable mirror array 50 allows a quick and optional achieving of a maximum intensity zone 61 at the upper right or a maximum intensity zone 61' at the upper left.

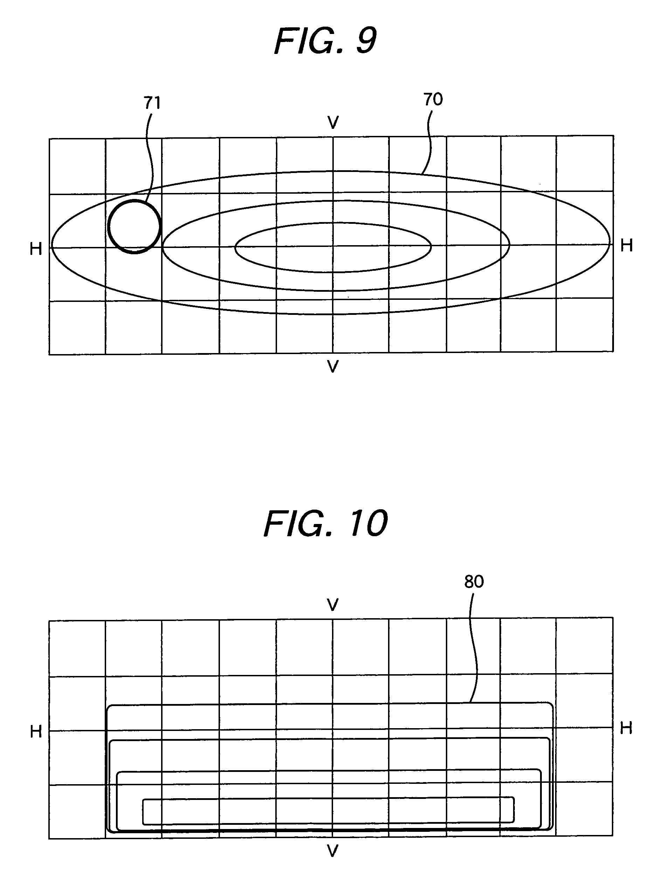

This invention is capable of not only the use of low-beam illuminating but also that of high-beam illuminating. There is shown in Figure 9 a light distribution illuminated from a vehicle headlight (for high beam) made possible according to this invention. This pattern of light distribution allows that during high-speed driving, together with a high-beam setting (an equal-intensity point distribution 70), objects like a roadsign located on the left-hand side of the road are quickly illuminated by operating a movable-mirror array 50 and then achieving a spot 71 of light in the equal-intensity point distribution 70. This spot 71, as described above, can also be achieved with infrared light illumination using movable mirrors 1 in the movable mirror array 50 some of which have a wavelength selective film between infrared light and visible light on them.

Figures 8 and 9 show that the equal-intensity point distribution is so patterned that intensity concentrically becomes lower as the point is farther away from the center. But now it is possible to have an optional pattern in equal-intensity point distribution. Figure 10 shows such an optional pattern. When the vehicle runs at a low speed in downtown areas of heavy traffic, a low-beam lateral illuminating is used to give a horizontally elongated distribution pattern 80 with intensity becoming gradually lower as the point is farther away from the center. This allows it to be easier to recognize such objects on the road as white lines, pedestrians and gutters.

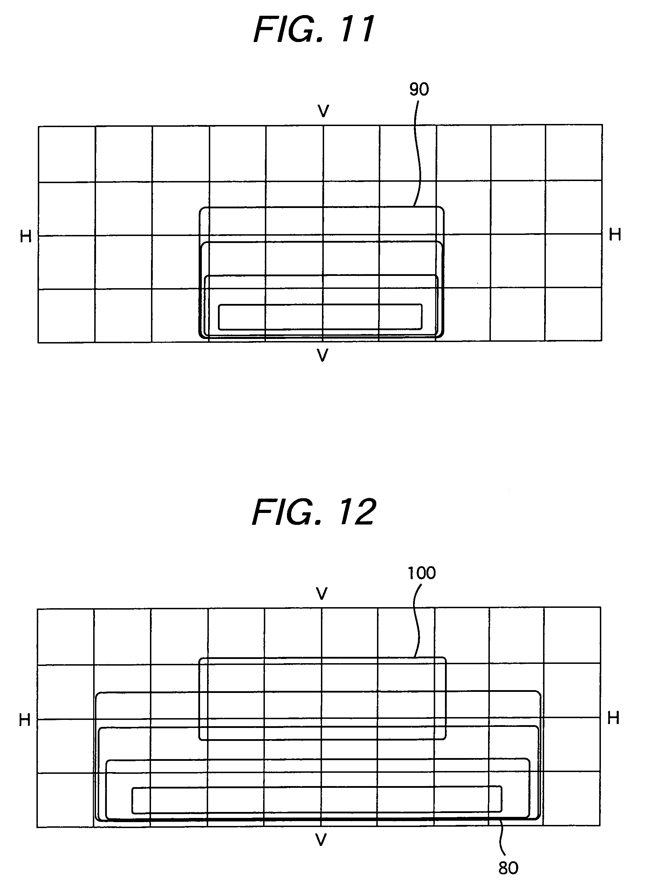

Figure 11 shows a modification of the light distribution shown in Figure 10. When the vehicle runs on expressways where there are comparatively few oncoming vehicles and leading vehicles, a low-beam illuminating is used to give a horizontally reduced distribution pattern (distribution pattern 90) laterally shorter than shown in Figure 10 in order to increase its entire intensity and the recognition ahead of the vehicle to fit high-speed running.

Figure 12 shows a light distribution obtained by overlapping the light distribution pattern 80 shown in Figure 10 and some infrared light distribution 100 for objects in the distance. This is made possible, as described earlier, using movable mirrors 1 in the movable mirror array 50 some of which have a wavelength selective film between infrared light and visible light on them. Namely, the vehicle driver uses the light distribution pattern 80 to recognize objects present near the vehicle and simultaneously employs the infrared light distribution 100 for objects in the distance so that a CCD camera will quickly detect objects present in the distance in order to keep safe driving.

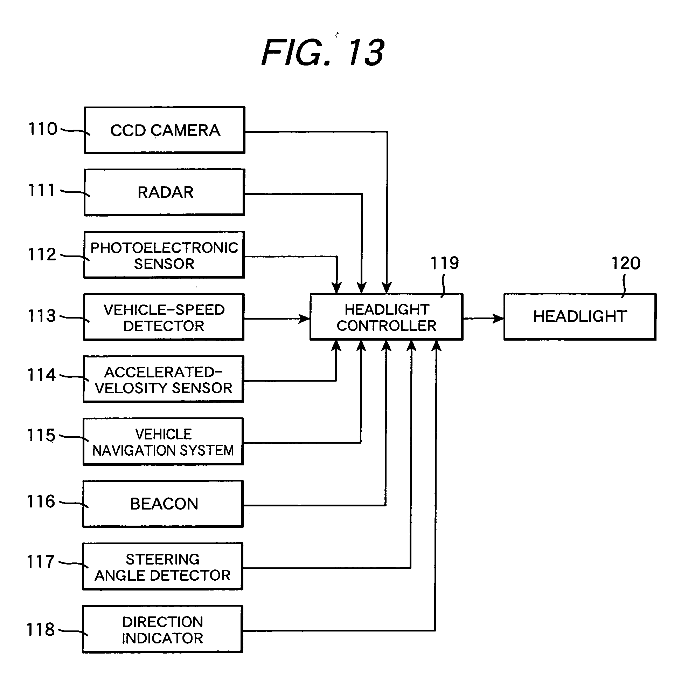

Now, there is shown in Figure 13 a diagram for a system of this invention for a vehicle headlight and a vehicle operation support apparatus. Vehicle-mounted sensors such as a CCD camera 110 for grasping road situations ahead of the vehicle, a radar 111 a photo electronic sensor 112, a vehicle-speed detector 113 and an accelerated-velocity sensor 114 for measuring the distance between vehicles, have signals sent from them to a headlight controller 119. These signals are processed and then used to control the operation of the movable-mirror arrays mounted in a headlight 120 by the headlight controller 119. Concrete operations will be the use of the CCD camera 110 to detect white lines, road shoulders and pedestrians on the road for spot illuminating and infrared-light distant illuminating control by the headlight controller 119 (Figures 8, 9 and 12) and also will be the use of the radar 111 and the photo electronic sensor 112 to implement the vehicular gap detection for change of vertical and lateral light distribution (Figures 10 and 11) and control of equal-intensity point and maximum-intensity zone by the headlight controller 119.

Besides, a vehicle navigation system 115, a beacon 116, a steering angle detector 117 and a direction indicator 118 have signals sent from them to a headlight controller 119, known road situations are handled by sure-performed light distribution control, intersection turning is handled by sure-performed light distribution control, thus vehicular safe driving will be enhanced and drivers' headlight operation will be eased.

## Claims

1. A vehicle headlight having a light source to emit light and a reflector for illuminating forward the light emitted from the light source, wherein the reflector is comprising:
a plurality of movable mirrors to be operated independently and optionally and a fixed mirror disposed outside these movable mirrors, whereby the light emitted from the light source to the movable mirrors are not blocked mutually.

2. A vehicle headlight according to Claim 1; wherein the movable mirrors are operated in a direction of two axes at right angles to each other.

3. A vehicle headlight according to Claim 2; wherein the movable mirror is comprising a mirror member, first beam connecting the mirror member, a frame positioned so as to surround the mirror member, second beam connecting the frame and a mirror base plate placed outside the frame, wherein the first and second beams work as rotational axes of the mirror member at right angles to each other, and the frame, beams and mirror base plate reflect the light emitted from the light source, respectively.

4. A vehicle headlight according to Claim 3; wherein back side of the movable mirror is formed out of either a soft magnetic material, a permanent magnet or a coil, and a plurality of stator coil positioned facing the back side of the movable mirror, and magnetic force between the movable mirror and the stator coil is controlled so as to operate the movable mirror with an optional angle in the direction of two axes at right angles to each other.

5. A vehicle headlight according to Claim 4; wherein the movable mirror is operated to optionally alter a distribution of light illuminated from the vehicle headlight.

6. A vehicle headlight according to Claim 5; wherein a high-intensity discharge lamp is used for the light source, and the movable mirror is operated to control light illuminated from the vehicle headlight.

7. A vehicle headlight according to Claims 5, wherein a part of plurality of movable mirrors have a function of transmitting visible light emitted from the light source and reflecting infrared light emitted from the light source, and further comprising an electric circuit for controlling the part of plurality of the movable mirrors independently of other part of plurality of movable mirrors.

8. A vehicle headlight according to Claims 1 to 7; further comprising a sensor for detecting a situation surrounding the vehicle and other sensor for detecting an operational condition of the vehicle, wherein a distribution of the light illuminated from the vehicle headlight is controlled with optimal to the situation surrounding the vehicle and to the operational condition of the vehicle based on the output of these sensors.

9. A vehicle operation support apparatus with a vehicle headlight having a light source to emit light and a reflector for illuminating forward the light emitted from the light source, wherein the reflector is comprising:
a plurality of movable mirrors to be operated independently and optionally and a fixed mirror disposed outside these movable mirrors, whereby the light emitted from the light source to the movable mirrors is not blocked mutually.
